# EUROPEAN PATENT APPLICATION

(11) **EP 2 663 152 A1**
(43) Date of publication of application: **13.11.2013**
(21) Application number: 11854879.1
(22) Date of filing: 07.01.2011
(51) Int. Cl.: H04W 72/12

(54) **METHOD FOR SENDING SOUNDING REFERENCE SYMBOL, E-NODEB AND USER EQUIPMENT**

(71) Applicant: Fujitsu Limited, Kawasaki-shi, Kanagawa 211-8588 (JP)
(72) Inventor: WANG, Yi, Beijing 100025 (CN); ZHOU, Hua, Beijing 100025 (CN); WU, Jianming, Beijing 100025 (CN)
(74) Representative: Fenlon, Christine Lesley
(86) International application number: PCT/CN2011/070090
(87) International publication number: WO 2012/092720

(57) **Abstract**

A method for transmitting a sounding reference symbol, a base station and user equipment. The method comprises: generating by a base station downlink control information for uplink transmission, the downlink control information comprising indication information on indicating user equipment whether to transmit an aperiodic sounding reference symbol and on the resource used in transmitting the aperiodic sounding reference symbol; and a bit of a new data indicator in the downlink control information and a bit of an aperiodic sounding reference symbol request being used to carry the indication information; and transmitting to the user equipment the downlink control information, such that the user equipment transmits the aperiodic sounding reference symbol according to the indication information contained in the downlink control information. With the embodiments of the present invention, the base station may effectively use a bit of an NDI in DCI for uplink transmission, such as DCI format 0 or DCI format 4, not only increasing available resources, but also reducing the occurrence of collision in A-SRS.

## Description

### Technical Field

The present invention relates to field of radio communication, and in particular to a method for transmitting a sounding reference symbol, a base station and user equipment.

### Background Art

A sounding reference symbol (SRS) is a symbol transmitted by user equipment (UE) to a base station, and is a reference symbol used for channel quality sounding, power control and timing estimation of uplink scheduling by the base station, and supporting the arrival direction estimation of downlink beamforming, etc.

In a long-term evolution (LTE) system, the UE periodically transmits SRSs according to the resources indicated by the base station (eNB), such as parameters of a transmission bandwidth, a starting position of the frequency domain, a cyclic shift (CS), and a subframe shift, etc., the transmission being performed in the last orthogonal frequency division multiplexing (OFDM) symbol in each subframe. The eNB judges uplink channel state information (CSI) of the UE according to the received SRS, and performs such operations as frequency domain selection, and scheduling, etc., according to the obtained CSI. Wherein, the resources indicated by the eNB are configured via a high-layer, i.e. a radio resource control (RRC) protocol.

In an advanced long-term evolution (LTE-Advanced) system, transmission of aperiodic sounding reference symbols is added. For the sake of description, a sounding reference symbol that is transmitted periodically is herein referred to as a periodic SRS, and a sounding reference symbol that is transmitted aperiodically is referred to as an aperiodic SRS. Currently, the aperiodic SRS is triggerred via downlink control information (DCI) for uplink transmission transmitted by the base station, that is, the UE is notified via DCI format 0 and DCI format 4 whether to transmit an aperiodic SRS and the resources used in the transmission of the aperiodic SRS.

However, in the implementation of the present invention, the inventors found that following shortcomings exist in the prior art: at present, 1 bit in the DCI format 0 may be used to trigger an aperiodic SRS, wherein '0' denotes that no aperiodic SRS is transmitted, and '1' denotes that an aperiodic SRS is transmitted, and only one group of resources is indicated. In an LTE-A system, 2 bit in the DCI format 4 is used to trigger an aperiodic SRS, wherein '00' denotes that no aperiodic SRS is transmitted, and '01/10/11' denotes that an aperiodic SRS is transmitted, and three groups of resources are indicated, respectively. However, in the LTE-A system, as the introduction of multi-antenna and carrier aggregation, the probability of collision occurrence of an aperiodic SRS is still relatively high when one group of resources is configured, or even if three groups of resources are configured, and the flexibility of resource allocation is limited. At present, in an LTE-A system, no solution is found to overcome the above shortcomings simply and effectively.

### Summary of the Invention

An object of the embodiments of the present invention is to provide a method for transmitting a sounding reference symbol, a base station and user equipment, wherein the base station transmits indication information by using DCI for uplink transmission, such as the bits of an new data indicator (NDI) in DCI format 0 or DCI format 4, and the bits of an aperiodic SRS (A-SRS) request, so that the UE transmits the A-SRS according to the indication information. This may not only effectively use the unused bits in DCI format 0 or DCI format 4, but also increase available resources, thereby reducing the occurrence of collision of the A-SRS.

According to one aspect of the embodiments of the present invention, there is provided a method for transmitting a sounding reference symbol, comprising:
generating by a base station downlink control information for uplink transmission, the downlink control information comprising indication information on indicating user equipment whether to transmit an aperiodic sounding reference symbol and on the resource used in transmitting the aperiodic sounding reference symbol; and a bit of a new data indicator in the downlink control information and a bit of an aperiodic sounding reference symbol request being used to carry the indication information; and
transmitting the downlink control information to the user equipment, such that the user equipment transmits the aperiodic sounding reference symbol according to the indication information contained in the downlink control information.

According to another aspect of the embodiments of the present invention, there is provided a method for transmitting a sounding reference symbol, comprising:
receiving by user equipment downlink control information for uplink transmission transmitted by a base station, the downlink control information comprising indication information on indicating user equipment whether to transmit an aperiodic sounding reference symbol and on the resource used in transmitting the aperiodic sounding reference symbol, and the base station using a bit of a new data indicator in the downlink control information and a bit of an aperiodic sounding reference symbol request to carry the indication information; and
transmitting by the user equipment the aperiodic sounding reference symbol according to the indication information.

According to a further aspect of the embodiments of the present invention, there is provided a base station, comprising:
an information generating unit to generate downlink control information for uplink transmission, the downlink control information comprising indication information on indicating user equipment whether to transmit an aperiodic sounding reference symbol and on the resource used in transmitting the aperiodic sounding reference symbol; and a bit of a new data indicator in the downlink control information and a bit of an aperiodic sounding reference symbol request being used to carry the indication information; and
an information transmitting unit to transmit the downlink control information to the user equipment, such that the user equipment transmits the aperiodic sounding reference symbol according to the indication information contained in the downlink control information.

According to a further still aspect of the embodiments of the present invention, there is provided user equipment, comprising:
an information receiving unit to receive downlink control information for uplink transmission transmitted by a base station, the downlink control information comprising indication information on indicating the user equipment whether to transmit an aperiodic sounding reference symbol and on the resource used in transmitting the aperiodic sounding reference symbol; and a bit of a new data indicator in the downlink control information and a bit of an aperiodic sounding reference symbol request being used to carry the indication information; and
an information processing unit to transmit the aperiodic sounding reference symbol according to the indication information received by the information receiving unit.

According to a further still aspect of the embodiments of the present invention, there is provided a computer-readable program, wherein when the program is executed in a base station, the program enables the computer to carry out the method for transmitting an aperiodic sounding reference symbol as described above in the base station.

According to a further still aspect of the embodiments of the present invention, there is provided a storage medium in which a computer-readable program is stored, wherein the computer-readable program enables the computer to carry out the method for transmitting an aperiodic sounding reference symbol as described above in a base station.

According to a further still aspect of the embodiments of the present invention, there is provided a computer-readable program, wherein when the program is executed in user equipment, the program enables the computer to carry out the method for transmitting an aperiodic sounding reference symbol as described above in the user equipment.

According to a further still aspect of the embodiments of the present invention, there is provided a storage medium in which a computer-readable program is stored, wherein the computer-readable program enables the computer to carry out the method for transmitting an aperiodic sounding reference symbol as described above in user equipment.

The advantages of the present invention exist in that the base station transmits indication information by using DCI for uplink transmission, such as the bits of an new data indicator (NDI) in DCI format 0 or DCI format 4, and the bits of an aperiodic SRS (A-SRS) request, so that the UE transmits the A-SRS according to the indication information. This may not only effectively use the unused bits in DCI format 0 or DCI format 4, but also increase available resources, thereby reducing the occurrence of collision of the A-SRS.

Particular embodiments of the invention have been disclosed in detail with reference to the following description and attached drawings as being indicative of some of the ways in which the principles of the invention may be employed, but it is understood that the invention is not limited correspondingly in scope. Rather, the invention includes all changes, modifications and equivalents coming within the spirit and terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

The above and other objects, features and advantages of the present invention will be apparent from the following detailed description in conjunction with the drawings, in which:
Figure 1 is a flowchart of the method for transmitting an aperiodic sounding reference symbol of embodiment 1 of the present invention;
Figure 2 is a flowchart of the method for transmitting an aperiodic sounding reference symbol of embodiment 3 of the present invention;
Figure 3 is a flowchart of the method for transmitting an aperiodic sounding reference symbol at a base station side of embodiment 4 of the present invention;
Figure 4 is a flowchart of the method for transmitting an aperiodic sounding reference symbol at a user equipment side of embodiment 4 of the present invention;
Figure 5 is a structural diagram of the base station of embodiment 5 of the present invention;
Figure 6 is a structural diagram of the base station of embodiment 6 of the present invention;
Figure 7 is a structural diagram of the base station of embodiment 7 of the present invention;
Figure 8 is a structural diagram of the base station of embodiment 8 of the present invention;
Figure 9 is a structural diagram of the user equipment of embodiment 9 of the present invention;
Figure 10 is a structural diagram of the information processing unit of embodiment 9 of the present invention; and
Figure 11 is a structural diagram of the information processing unit of embodiment 9 of the present invention.

### Detailed Description of the Invention

Various embodiments of the present invention shall be described below with reference to the accompanying drawings. Such embodiments are exemplary only are not intended to limit the present invention. For easy understanding of the principle and implementation of the present invention by those skilled in the art, the embodiments of the present invention shall be described taking an LTE-A frequency division duplexing (FDD) system as an example. However, it should be understood that the present invention is not limited thereto, and is applicable to any other systems of other bandwidths concerning transmission of A-SRSs.

### Embodiment 1

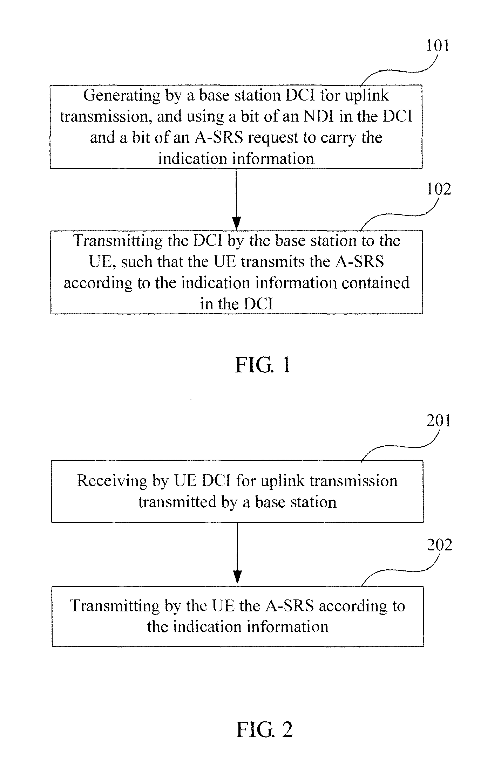

Fig. 1 is a flowchart of the method for transmitting an aperiodic sounding reference symbol of embodiment 1 of the present invention. As shown in Fig. 1, the method comprises:

step 101: generating by a base station DCI for uplink transmission, the DCI comprising indication information on indicating UE whether to transmit an aperiodic sounding reference symbol and on the resource used in transmitting the aperiodic sounding reference symbol; and a bit of a new data indicator in the downlink control information and a bit of an aperiodic sounding reference symbol request being used to carry the indication information; and

step 102: transmitting the DCI by the base station to the UE, such that the UE transmits the aperiodic sounding reference symbol according to the indication information contained in the DCI.

In an LTE-A system, as explained in the Background Art, currently, in order to improve the punctuality and accuracy of uplink channel information, by scheduling the DCI transmitted by an uplink PUCCH, such as DCI format 0 and DCI format 4, the UE may be indicated to transmit an A-SRS, and information on the resources used in transmitting the A-SRS is also indicated while indicating the UE to transmit the A-SRS.

Table 1 shows the carried information and length of the DCI format 0 configured with a 10 MHz bandwidth in an LTE-A FDD system of the embodiment of the present invention.Wherein the 3-bit carrier indicator may only be configured in a user-specific search space, the 1-bit A-SRS request may only be configured in the user-specific search space, the 2-bit aperiodic CQI request may only be configured in the user-specific search space, 1-bit is only configured in the common search space or in case of single carrier, and filling bits are not counted for the payload in the table. Table 2 shows the carried information and length of the DCI format 4 in an LTE-A FDD system of the embodiment of the present invention. Wherein the 3-bit carrier indicator may only be configured in a user-specific search space, the 2-bit aperiodic CQI request may only be configured in case of multiple carriers, 1-bit is only configured in case of single carrier, and filling bits are not counted for the payload in the table.

**Table 1**

| | |
|---|---|
| Carrier Indicator | 0/3 |
| Flag for DCI 0/1A | 1 |
| Hopping flag | 1 |
| Resource allocation | 11 |
| Modulation and coding scheme | 5 |
| New data indicator | 1 |
| Power control for PUSCH | 2 |
| Cyclic shift for DMRS and OCC | 3 |
| Aperiodic CQI request | 2 |
| A-SRS request | 1 |
| Multi-cluster flag | 1 |
| Payload | 28/31 |

**Table 2**

| | |
|---|---|
| Carrier Indicator | 0/3 |
| Resource allocation | 11 |
| Power control for PUSCH | 2 |
| Cyclic shift for DMRS and OCC | 3 |
| Aperiodic CQI request | 2 |
| A-SRS request | 2 |
| Multi-cluster flag | 1 |
| Modulation and coding scheme for the 1st TB | 5 |
| New data indicator for the 1st TB | 1 |
| Modulation and coding scheme for the 2nd TB) | 5 |
| New data indicator for the 2nd TB | 1 |
| PMI/RI | 3/6 |
| Payload | 36/39/42 |

In addition, currently, in using the DCI format 0 or the DCI format 4 to trigger aperiodic CSI, the UE may transmit uplink control information (UCI) containing the aperiodic CSI to the base station via a physical uplink shared channel (PUSCH), the UCI containing the aperiodic CSI transmitting in the PUSCH may be divided into: 1) the UCI is transmitted individually in the PUSCH (CQI-only PUSCH), that is, no uplink data is transmitted in transmitting the aperiodic CSI; and 2) the UCI is transmitted together with the uplink data in the PUSCH, that is, uplink data is also transmitted in transmitting the aperiodic CSI.

Wherein, in the first case, the bits of the new data indicator (NDI) in the DCI format 0 or the DCI format 4 are not needed, and the unused bits of the NDI are not effectively used. As shown in Table 1, in the DCI format 0, the number of the bits of the NDI is 1, and in the DCI format 4, the number of the bits of the NDI is 2.

Therefore, in the embodiment of the present invention, the base station uses the DCI transmitted by the PUSCH, such as a bit of the NDI in the DCI format 0 or the DCI format 4 and a bit of the A-SRS request, to carry the indication information for indicating the triggering of the A-SRS and indicating the information on the resources for transmitting the A-SRS. This may not only effectively use the unused bits in DCI format 0 or DCI format 4, but also increase available resources, thereby reducing the occurrence of collision in the A-SRS.

In this embodiment, in step 101, the base station may generate corresponding DCI according to the transmission mode and the requirements of the system, which is similar to the prior art, and shall not be described any further. Wherein, a bit of the NDI in the DCI format 0 or the DCI format 4 and a bit of the A-SRS request are used to trigger the transmission of the A-SRS, that is, whether to transmit an A-SRS is indicated and the information on the resources for transmitting the A-SRS is indicated.

### Embodiment 2

In this embodiment, based on Embodiment 1, before the base station generates the DCI for uplink transmission, the method may further comprise: configuring resources by the base station used in transmitting the A-SRS, and notifying the configured resources to the UE.

In this embodiment, the base station may configure via high layer signaling, such as an RRC protocol.

In this embodiment, the base station may configure the resources used in transmitting the A-SRS in the manners as follows:
First manner: configuring a plurality groups of resources by the base station, each of the plurality groups of resources comprising information on the resources used in transmitting the A-SRS; and storing correspondingly the configured plurality groups of resources and respective indication information.

In such a case, when the base station uses the above-described bits to indicate the UE to transmit the A-SRS, the resources indicated by the indication information for use by the UE are one of the preconfigured plurality groups of resources.

In addition, in order to save high layer signaling, only a part of the resource information used in transmitting the A-SRS may be configured, and those resources shared with the transmission of the periodic SRS may not be configured. Hence, the resource information configured by the base station may be a subset of the resource information configured by the base station for transmitting the periodic SRS.

Example 1: for the DCI format 0, when 1 bit of the NDI and 1 bit of the A-SRS request are used to carry the indication information, the base station may configure 3 groups of resources, each group corresponding to different states; wherein "00" denotes that no A-SRS is transmitted, and "01/10/11" denotes that an A-SRS is transmitted, and different states correspond to different resources.

Example 2: for the DCI format 4, when 1 bit of the NDI and 2 bits of the A-SRS request are used to carry the indication information, the base station may configure 7 groups of resources, each group corresponding to different states; wherein "000" denotes that no A-SRS is transmitted, and "001/010/011/100/101/110/111" denotes that an A-SRS is transmitted, and different states correspond to different resources.

Wherein, the used 1 bit of the NDI may be 1 bit of a used NDI to which a transport block (TB) corresponds, and may also be 1 bit of an unused NDI to which a TB corresponds; preferably, 1 bit of a used NDI is used, so as to fully use the used bits.

Example 3: for the DCI format 4, when 2 bits of the NDI and 2 bits of the A-SRS request are used to carry the indication information, the base station may configure 15 groups of resources, each group corresponding to different states; wherein "0000" denotes that no A-SRS is transmitted, and "0001/0010/0011/0100/0101/0110/0111/1000/1001/1010/1011/1100/1101/1110/1111" denotes that an A-SRS is transmitted, and different states correspond to different resources.

Second manner: configuring and storing by the base station a part of a group of resource information used in transmitting the A-SRS; and
configuring by the base station other resources used in transmitting the A-SRS than the part of the resource information, and correspondingly storing the configured other resources used in transmitting the A-SRS than the part of the resource information and respective indication information.

In such a case, when the base station indicates the UE to transmit the A-SRS, the resources indicated by the indication information for use by the UE are the other resources used in transmitting the A-SRS than the part of the resources.

In comparison with the first manner, the overhead of the high layer signaling is saved.

In addition, in order to further save the overhead of the high layer signaling, those resources shared with the transmission of the periodic SRS may not be contained in the part of the group of resources configured by the base station.

For such a case, explanation is given below by way of examples.

Third manner: configuring by the base station a plurality of groups of resources with a number one less than the number of the states of the bit of the A-SRS request, and correspondingly storing the configured plurality of groups of resources and the states of the bit of the A-SRS request; wherein each of the plurality of groups of resources comprises a part of the resource information used in transmitting the A-SRS; and
configuring by the base station a plurality of groups of resources used in transmitting the A-SRS except the part of the resource information and with a number identical to the number of the states of the bit of the NDI, and correspondingly storing the configured plurality of groups of resources and the states of the bit of the NDI;
wherein in indicating the UE to transmit the A-SRS, the resources indicated by the indication information for use by the UE comprise the resources to which the states of the bit of the NDI correspond and the resources to which the states of the bit of the A-SRS request correspond.

For such a case, explanation is given below by way of examples.

Fourth manner: the configuring by the base station a plurality of groups of resources used in transmitting the A-SRS except the part of the resource information may be as follows:
1. when the bit of the NDI is 1 bit, the states of the bit of the NDI and the states of the bit of the A-SRS request are respectively used to indicate different resource information; and
2. when the bit of the NDI is 2 bits, the states of one bit of the NDI is used to indicate one type of resources, and the other bit of the NDI and the bit of the A-SRS request are used to indicate another type of resources.

For such a case, explanation is given below by way of examples.

In the above-described resource configuration, the resources shared by the resources used in transmitting the A-SRS and the resources used in transmitting the periodic SRS may be preconfigured and notified to the UE. Thus, in configuring by the base station the resources used in transmitting the A-SRS, the shared resources may not be configured, so as to save high layer signaling.

Following description is given taking generation of DCI format 0 and DCI format 4 by the base station as examples.

### Example 1: for DCI format 0

As shown in Table 1, in the DCI format 0, 1 bit of the NDI and 1 bit of the A-SRS request, "XY", are used to carry the indication information; wherein, for example, "X" is the state to which the bit of the NDI corresponds, "Y" is the state to which the bit of the A-SRS request corresponds, and vice versa.

In this embodiment, the base station may pre-configure three groups of resources, each group comprising the resource information used in transmitting the A-SRS; then the configured three groups of resources and the indication information of 2 bits are correspondingly stored; and in indicating the UE to transmit the A-SRS, the resources indicated by the indication information for use by the UE are one of the preconfigured three groups of resources; wherein the three groups of resources are completely configured via high layer signaling, such a radio resource control (RRC) protocol.

Table 3 shows a mapping relation between the indication information of 2 bits and corresponding resources of the embodiment of the present invention. As shown in Table 3, if "XY"="00", it denotes that the UE doesn't need to transmit the A-SRS, and resource doesn't need to be configured; and if "XY"='01'/'10'/'11', the base station correspondingly configures the UE with three groups of resources , each state corresponding to one group of resources.

Wherein the numerical values of the configured resources may be determined as actually required, and are schematically denoted herein by symbols.

**Table 3**

| 'XY' | SRS cycle | SRS offset | SRS bandwidth | Frequency domain position | SRS Hopping bandwidth | Transmission comb | Cyclic shift | Number of antenna ports | Number of indices of CCs |
|---|---|---|---|---|---|---|---|---|---|
| '00' | \ | \ | \ | \ | \ | \ | \ | \ | \ |
| '01' | C1 | C2 | C3 | C4 | C5 | C6 | C7 | C8 | C9 |
| '10' | D1 | D2 | D3 | D4 | D5 | D6 | D7 | D8 | D9 |
| '11' | E1 | E2 | E3 | E4 | E5 | E6 | E7 | E8 | E9 |

It can be seen from Table 3 that when 'XY'='01'/'10'/'11', it denotes that the UE transmits the A-SRS at a predetermined time, and which group of resources is used is also indicated. Wherein transmitting the A-SRS at a predetermined time by the UE comprises: transmitting the A-SRS by the UE at a first subframe satisfying the cycle and offset condition after at least 4 subframes, if the UE receives DCI containing the indication information at the n-*th* subframe.

As shown in Table 3, the resource information may comprise: SRS periodicity, SRS subframe offset, SRS bandwidth, frequency domain position, SRS hopping bandwidth (if it supports the function of hopping), transmission comb, cyclic shift, and antenna information, such as the number of antenna ports; or it may further comprise carrier information, such as the number of indices of component carriers (CCs), etc.

In this embodiment, the base station notifies the configured mapping relation as shown in Table 3 to the UE and the mapping relation is stored at the UE side. Therefore, when the UE receives the DCI, it may determine whether to transmit an A-SRS according to the indication information therein, prestored indication information and a used mapping relation of resources (such as Table 3), and determines the used resources if an A-SRS is transmitted.

In the above embodiment, the resource information used in transmitting the A-SRS and configured by the base station may comprise all the resource information needed in transmitting the A-SRS. The resource information of each group of resources corresponding to the periodic SRS is identical, but the value ranges thereof may be different from that of the periodic SRS.

### Example 2: for DCI format 0

On the basis of Example 1, in order to further reduce the signaling overhead, in consideration that in the resource information configured by the base station via high layer signaling, some of the resource information is shared by the transmission of periodic SRS and the transmission of A-SRS, and the base station generally configures all the resource information used in transmitting the periodic SRS via high layer signaling, therefore, in configuring the resource information used in transmitting the A-SRS via high layer signaling, the shared resources may be configured no longer. In this way, the resource information used in transmitting the A-SRS contained in each of the plurality of groups of resources configured by the base station is a subset of the resource information used in transmitting the periodic SRS configured by the base station via high layer signaling. Thus, the UE may transmit the A-SRS according to the resources used for transmitting the A-SRS configured by the base station via high layer signaling and the prestored shared resources.

Table 4 shows a mapping relation between the indication information of 2 bits and corresponding resources of the embodiment of the present invention. Wherein the resource information used in transmitting the A-SRS configured by the base station is a subset of the resource information used in transmitting the periodic SRS.

**Table 4**

| 'XY' | SRS bandwidth | Frequency domain position | SRS Hopping bandwidth | Transmission comb | Cyclic shift | Number of antenna ports | Number of indices of CCs |
|---|---|---|---|---|---|---|---|
| '00' | \ | \ | \ | \ | \ | \ | \ |
| '01' | C1 | C2 | C3 | C4 | C5 | C6 | C7 |
| '10' | D1 | D2 | D3 | D4 | D5 | D6 | D7 |
| '11' | E1 | E2 | E3 | E4 | E5 | E6 | E7 |

If a part of all the resources needed in transmitting the A-SRS are included in Table 4, that is, the shared resources, such as the SRS cycle and the SRS offset, are not included, in determining to transmit the A-SRS, the resources used in transmitting the A-SRS may be determined according to the indication information and the prestored mapping relation between the indication information and the used resources (such as Table 4), and then the UE uses the determined resources and the prestored shared resources to transmit the A-SRS.

### Example 3: for DCI format 0

In this embodiment, in addition to the resource information used in transmitting the A-SRS and configured via high layer signaling, the resource information used in transmitting the A-SRS may also be configured in a manner of dynamic configuration as below.

The base station configures a part of a group of resource information used in transmitting the A-SRS, the part of resource information may be configured by the base station via high layer signaling, such as RRC; and then the configured part of resource information is stored, and is also stored at the UE side;
wherein the part of resource information may be a part of the resource information needed by the UE in transmitting the A-SRS, i.e. a subset of the resource information needed in transmitting the A-SRS; furthermore, the base station configures other resource information needed in transmitting the A-SRS than this part of resource information; wherein the resources comprise one or more pieces of the resource information except this part of resource information configured via high layer signaling, depending on the circumstances; and the base station correspondingly stores the resources other than the part of the resource information configured via high layer signaling and respective indication information, notifies the UE, and stores the corresponding relation at the UE side. And in indicating the UE to transmit the A-SRS, the resources in the indication information indicated to be used by the UE are the resources needed in transmitting the A-SRS except this part of resource.

It can be seen from above that a part of the information used by the UE in transmitting the A-SRS may be configured via high layer signaling, and a part may be indicated via indication information. In this way, the overhead of high layer signaling may be reduced, the A-SRS may be transmitted more flexibly, and the probability of the occurrence of collision between UE may be reduced. Wherein, the dynamically configured resource information may comprise one or more of antenna information, carrier information, and cyclic shift, but is not limited thereto, and the dynamically configured resource may be determined as actually required.

Table 5 shows a part of a group of resource information used in transmitting the A-SRS and configured by the base station via RRC signaling. As compared with Table 3, the number of antenna ports is not configured, and the number of antenna ports is dynamically configured by the base station via indication information, as shown in Table 6.

**Table 5**

| SRS cycle | SRS offset | SRS bandwidth | Frequency domain position | SRS Hopping bandwidth | Transmission comb | Cyclic shift | Number of indices of CCs |
|---|---|---|---|---|---|---|---|
| F1 | F2 | F3 | F4 | F5 | F6 | F7 | F8 |

Table 6 is a table of mapping relation between a dynamically configured number of antenna ports and the indication information of the embodiment of the present invention.

**Table 6**

| 'XY' | Number of antenna ports |
|---|---|
| '00' | \ |
| '01' | 1 |
| '10' | 2 |
| '11' | 4 |

Furthermore, the base station may configure a part of a group of resource information used in transmitting the A-SRS via RRC signaling, for example, an index of component carrier or a cyclic shift may be excluded; and the information may be dynamically configured by the base station. Table 7 is a table of mapping relation between indices of component carriers and the indication information of the embodiment of the present invention, and Table 8 is a table of mapping relation between cyclic shifts and the indication information of the embodiment of the present invention

**Table 7**

| 'XY' | Indices of component carriers |
|---|---|
| '00' | \ |
| '01' | Uplink CCs to which downlink CCs correspond indicated in the DCI 0 |
| '10' | M |
| '11' | N |

**Table 8**

| 'XY' | Cyclic shift |
|---|---|
| '00' | \ |
| '01' | L |
| '10' | M |
| '11' | N |

The above embodiment is described taking dynamically indicating resource information as an example. Furthermore, one or more of the above resources may be dynamically indicated, which shall not be described herein any further.

In this embodiment, in case of dynamically indicating resources, the base station notifies the mapping relation shown in Table 6, Table 7 or Table 8 and the part of the group of resource information configured via high layer signaling to the UE, and stores them at the UE side. In this way, when the UE receives the DCI, it may determine whether to transmit the A-SRS according to the indication information contained therein, in case of transmitting the A-SRS, determine dynamically allocated resource information according to the indication information and a prestored mapping relation between the indication information and the used resources (such as that shown in Table 6, Table 7 or Table 8), and uses the dynamically allocated information and the prestored part of resource information configured via high layer signaling to transmit the A-SRS.

In the above embodiment, the part of the resource information shown in Table 4 comprises the resources shared by the transmission of periodic SRS and the transmission of A-SRS.

### Example 4: for DCI format 0

On the basis of Example 3, in order to further reduce the signaling overhead, the resources configured by the base station and shown in Table 5 may exclude the resources shared with the periodic SRS, such as the SRS periodicity, and the SRS offset, etc.

Table 9 shows a part of a group of resource information used in transmitting the A-SRS and configured by the base station via RRC signaling. As compared with Table 5, the shared resources are not configured, and the number of antenna ports is dynamically configured by the base station via indication information, as shown in Table 6.

**Table 9**

| SRS bandwidth | Frequency domain position | SRS Hopping bandwidth | Transmission comb | Cyclic shift | Number of indices of CCs |
|---|---|---|---|---|---|
| F1 | F2 | F3 | F4 | F5 | F6 |

In this way, when the UE receives the DCI, in the case of determining to transmit the A-SRS, it may determine the used resources according to the indication information contained therein and a prestored mapping relation between the indication information and the used resources (such as that shown in Table 6, Table 7 or Table 8), and then uses the determined resources, a group of resources configured by the base station (as shown in Table 9) and the prestored shared resources to transmit the A-SRS.

It can be seen from the above embodiment that the base station uses a bit of the NDI in the DCI format 0 for uplink transmission and a bit of an A-SRS request to carry the indication information, so that the UE transmits the A-SRS, making the UE to punctually transmit the A-SRS. This may not only effectively use the unused bits in DCI format 0, but also increase available resources, thereby reducing the occurrence of collision in the A-SRS.

In examples 1-4, "X" corresponds to 1 bit of the NDI, and "Y" corresponds to 1 bit of the A-SRS request.

### Example 5: for DCI format 4

In this embodiment, the bits that carry the indication information are one bit of the NDI and two bits of an A-SRS request. Wherein "Z" corresponds to the one bit of the NDI, and "XY" corresponds to the two bits of the A-SRS request.

In this embodiment, the base station may pre-configure seven groups of resources, each group comprising the resource information used in transmitting the A-SRS; then the configured seven groups of resources and the indication information of 2 bits are correspondingly stored; and in indicating the UE to transmit the A-SRS, the resources indicated by the indication information for use by the UE are one of the preconfigured seven groups of resources; wherein the seven groups of resources are completely configured via high layer signaling, such a radio resource control (RRC) protocol.

Table 10 is the seven groups of resource information used in transmitting the A-SRS and configured by the base station via RRC signaling.

**Table 10**

| 'ZXY' | SRS bandwidth | Frequency domain position | SRS Hopping bandwidth | Transmission comb | Cyclic shift | Number of antenna ports | Number of indices of CCs |
|---|---|---|---|---|---|---|---|
| '000' | \ | \ | \ | \ | \ | \ | |
| '001' | C1 | C2 | C3 | C4 | C5 | C6 | C7 |
| '010' | D1 | D2 | D3 | D4 | D5 | D6 | D7 |
| '011' | E1 | E2 | E3 | E4 | E5 | E6 | E7 |
| '100' | F1 | F2 | F3 | F4 | F5 | F6 | F7 |
| '101' | G1 | G2 | G3 | G4 | G5 | G6 | G7 |
| '110' | H1 | H2 | H3 | H4 | H5 | H6 | H7 |
| '111' | 11 | I2 | I3 | I4 | I5 | I6 | I7 |

As 1 bit of the NDI is added, the available resources are increased, thereby reducing the occurrence of collision in the A-SRS. The manner of resource configuration and the manner of processing at the UE side are similar to those in Example 1, and shall not be described herein any further.

In addition, the processing of the shared resources is similar to that in Example 2, and shall not be described herein any further.

### Example 6: for DCI format 4

In this embodiment, the bits that carry the indication information are a 1 bit of the NDI and two bits of an A-SRS request.

Wherein, the base station configures a plurality of resources in a manner of a 1 bit of the NDI and two bits of an A-SRS. And wherein "Z" corresponds to the 1 bit of the NDI, and "XY" corresponds to the two bits of the A-SRS request.

Table 11 shows three groups of resources configured by the base station via RRC signaling which correspond to the states of the two bits of the A-SRS request, and Table 12 shows two groups of resources configured by the base station via RRC signaling which correspond to the states denoted by the 1 bit of the NDI.

**Table 11**

| 'XY' | SRS bandwidth | Frequency domain position | SRS Hopping bandwidth | Transmission comb | Cyclic shift | Number of antenna ports |
|---|---|---|---|---|---|---|
| '00' | \ | \ | \ | \ | \ | \ |
| '01' | C1 | C2 | C3 | C4 | C5 | C6 |
| '10' | D1 | D2 | D3 | D4 | D5 | D6 |
| '11' | E1 | E2 | E3 | E4 | E5 | E6 |

**Table 12**

| 'Z' | Number of indices of CCs |
|---|---|
| '0' | #1 CC or CCs with lower indices |
| '1' | #2 CC or CCs with higher indices |

It can be seen from Table 12 that the explanation is given taking two uplink CCs with a respective index #1 and #2. However, it is not limited thereto. For example, it may also be two CCs with a respective index #1 and #4, wherein Z=0 corresponds to 1 CC, and Z=1 corresponds to another CC, and this moment, the CC to which "Z=1" corresponds may be of a higher index, such as the CC to which 4 corresponds. Another example, it may also be two CCs with a respective index #0 and #2, wherein Z=0 corresponds to 1 CC, and Z=1 corresponds to another CC, and this moment, the CC to which "Z=0" corresponds may be of a lower index, such as the CC to which 0 corresponds. Furthermore, the CCs are usually arranged according to the magnitudes of the indices. For example, Z=0 denotes #1 CC, and Z=1 denotes #4 CC, etc. Wherein, such relations are predefined, that is, the base station and the UE are aware of the above mapping relations.

As shown in Table 11 and Table 12, the resources to which 1 bit of the NDI corresponds are the number of the indices of the CCs, and the resources to which the bits of the A-SRS request correspond are other resources.

In this way, the base station notifies the UE of the above resources after configuration, and the UE stores the above resources. If the DCI is received, the indication information is read therefrom. And if 1 bit of the NDI corresponds to "0" and the two bits of the A-SRS request correspond to "11", the UE may determine that the used resource is "#2 CC" and other resources are those to which "11" in Table 11 corresponds.

In addition, the processing of the shared resources is similar to that in Example 2, and shall not be described herein any further.

### Example 7: for DCI format 4

In this embodiment, the bits that carry the indication information are 1 bit of the NDI and two bits of an A-SRS request.

Wherein, "Z" corresponds to the 1 bit of the NDI, and "XY" corresponds to the two bits of the A-SRS request.

Similar to Example 3 and Example 4, the base station configures a part of one group of resources needed in transmitting the A-SRS, and other resources are dynamically configured by the base station.

Table 13 shows a part of one group of resources needed in transmitting the A-SRS configured by the base station of the embodiment of the present invention, and Table 14 shows seven groups of resources dynamically configured by the base station other than those in Table 13, which may be the number of the antennas and the indices of the CCs in this embodiment.

**Table 13**

| SRS bandwidth | Frequency domain position | SRS Hopping bandwidth | Transmission comb | Cyclic shift |
|---|---|---|---|---|
| K1 | K2 | K3 | K4 | K5 |

**Table 14**

| 'ZXY' | Number of antennas | Number of indices of CCs |
|---|---|---|
| '000' | \ | \ |
| '001' | 2 | C1 |
| '010' | 2 | C2 |
| '011' | 2 | C1&C2 |
| '100' | 4 | C1 |
| '101' | 4 | C2 |
| '110' | 4 | C3 |
| '111' | 4 | C1&C2&C3 |

When the bit of the NDI is 1 bit, the states denoted by the bit of the NDI and the states of the bits of the A-SRS request are respectively used to indicate different resource information. In Table 14, 1 bit of the NDI, "Z", denotes the number of the antennas, and the two bits of the A-SRS request correspond to indices of CCs.

In this way, the base station notifies the UE of the above resources after configuration, and stores the above resources at the UE. If the DCI is received, the indication information is read therefrom. And if 1 bit of the NDI corresponds to "0" and the two bits of the A-SRS request correspond to "10", the UE may determine that the used resources are CCs with the number of antennas being 2 and the index being C2 and a group of resources in Table 13.

### Example 8: for DCI format 4

In this embodiment, the bits that carry the indication information are two bits of the NDI and two bits of an A-SRS request.

In this embodiment, similar to Examples 1, 2 and 5, 15 groups of resources are configured, which shall not be described herein any further.

### Example 9: for DCI format 4

In this embodiment, the bits that carry the indication information are two bits of the NDI and two bits of an A-SRS request, which are expressed as "WZXY" in an order from NDI to A-SRS request. Wherein "WZ" correspond to two bits of the NDI, and "XY" correspond to two bits of the A-SRS request.

Similar to Example 3, Example 4 and Example 7, the base station configures a part of a group of resources needed in transmitting the A-SRS, as shown in Table 15; and other resources are dynamically configured by the base station.

Table 15 shows a part of one group of resources needed in transmitting the A-SRS configured by the base station of the embodiment of the present invention, and Table 16 shows seven groups of resources configured by the base station other than those in Table 15, which may be the transmission comb and the cyclic shift in this embodiment.

**Table 15**

| SRS bandwidth | Frequency domain position | SRS Hopping bandwidth | Number of antenna ports | Number of indices of CCs |
|---|---|---|---|---|
| N1 | N2 | N3 | N4 | N5 |

**Table 16**

| 'WZXY' | Transmission comb | Cyclic shift |
|---|---|---|
| '0000' | \ | \ |
| '0001' | #1 | C1 |
| '0010' | #1 | C2 |
| '0011' | #1 | C3 |
| '0100' | #1 | C4 |
| '0101' | #1 | C5 |
| '0110' | #1 | C6 |
| '0111' | #1 | C7 |
| '1000' | #2 | C8 |

In the above embodiment, if the number of bits of the NDI is 2, the state "W" of 1 bit of the NDI is used to indicate one resource, i.e. the transmission comb, and the state "Z" of the other bit of the NDI and the bits of the A-SRS request are used to indicate another resource, such as cyclic shift.

However, it is not limited thereto, and the 2 bits of the NDI may be used to indicate one resource, and the bits of the A-SRS request may be used to indicate another resource.

The base station notifies the UE of the above resources after configuration, and stores the above resources at the UE. If the UE receives the DCI transmitted by the base station, it reads the indication information therefrom, the order of reading may be predetermined, such as in an order of "WZXY", and then transmits the A-SRS according to the configured resources as shown in Table 15 and Table 16.

The processing of the shared resources is similar to that in Example 2, and shall not be described herein any further.

### Embodiment 3

Fig. 2 is a flowchart of the method for transmitting an aperiodic sounding reference symbol of embodiment 3 of the present invention. As shown in Fig. 2, the method comprises:
step 201: receiving by UE DCI for uplink transmission transmitted by a base station, wherein the DCI comprises indication information on indicating UE whether to transmit an A-SRS and on the resource used in transmitting the A-SRS, and the base station using a bit of an NDI in the DCI and a bit of an A-SRS request to carry the indication information; and
step 202: transmitting by the UE the A-SRS according to the indication information.

Wherein the DCI for uplink transmission may be DCI used for uplink PUSCH transmission, such as DCI format 0 or 4.

It can be seen from the above embodiment that the base station uses a bit of the NDI in the DCI indicating the uplink transmission and a bit of the A-SRS request to transmit the indication information, so that the UE transmits the A-SRS, making the UE to punctually transmit the A-SRS. This may not only effectively use the unused bits in DCI format 0 or 4, but also increase available resources, thereby reducing the occurrence of collision in the A-SRS.

In this embodiment, the base station configures the resource information used in transmitting the A-SRS via high layer signaling, as described in Embodiment 2, and notifies the resource information configured via high layer signaling to the UE and pre-stores the resource information configured via high layer signaling at the UE side.

In such a case, in step 202, the transmitting by the UE the A-SRS according to the indication information may comprise: determining by the UE the resource used to transmit the A-SRS according to the indication information and a prestored first mapping relation between indication information and resources if the UE determines that the indication information is indication information for transmitting the A-SRS; and transmitting the A-SRS by the UE by using the determined resource, or transmitting the A-SRS by the UE by using the determined resource and the prestored resources; wherein the first mapping relation is a corresponding relation between plural groups of resources configured by the base station and indication information, each of the plural groups of resources comprising resource information used to transmit the A-SRS (similar to examples 1 and 2 and examples 5 and 8 of Embodiment 2); and wherein the prestored information may be shared resources.

In this embodiment, in step 202, the transmitting by the UE the A-SRS according to the indication information may comprise: determining by the UE the resource used to transmit the A-SRS according to the indication information and a second mapping relation between prestored indication information and resources if the UE determines that the indication information is indication information for transmitting the A-SRS; and transmitting the A-SRS by the UE by using the prestored resources and the determined resources;
wherein the second mapping relation is a corresponding relation between the resource needed to transmit the aperiodic sounding reference symbol other than part of the resource information in the resource used to transmit the A-SRS configured by the base station and the indication information (similar to examples 3 and 4 and examples 7 and 9 of Embodiment 2).

In such a case, when the bit of the NDI is 1 bit, the state of the bit of the NDI and the states of the bits of the A-SRS request are respectively used to indicate different resource information (similar to Example 7 of Embodiment 2); or, when the number of bits of the NDI is 2, the state of 1 bit of the NDI is used to indicate a resource, and the state of the other bit of the NDI and the bits of the A-SRS request are used to indicate another resource (similar to Example 9 of Embodiment 2).

In this embodiment, in step 202, the transmitting by the UE the A-SRS according to the indication information may comprise:
determining by the UE the resource used to transmit the A-SRS according to the indication information and a third mapping relation and a fourth mapping relation between prestored indication information and resources if the UE determines that the indication information is indication information for transmitting the A-SRS; and transmitting the A-SRS by the UE by using the determined resource;
wherein the third mapping relation is a corresponding relation between plural groups of resources configured by the base station and states of the bit of the A-SRS request (similar to Table 11 of Example 6), and wherein, each of the plural groups of resources comprises a part of the resource information used in the transmission of the A-SRS; and the fourth mapping relation is a corresponding relation between the resource needed to transmit the A-SRS other than part of the resource information in the resource used to transmit the A-SRS configured by the base station and the states of the bit of the new data indicator (similar to Table 12 of Example 6).

Following description is given to step 202 in conjunction with the resource configuration of Examples 1-9 of Embodiment 2 corresponding to step 202.

In the following description, for format 0, "X" denotes 1 bit of the NDI, and "Y" denotes 1 bit of the A-SRS request.

### Example 1: for receiving DCI format 0 (corresponding to Example 1 of Embodiment 2)

For example, as shown in Table 3, when the indication information received by the UE is 'XY'='00', the UE may be aware from Table 3 that no A-SRS is transmitted, and no resource is needed; and when the UE receives 'XY'='01'/'10'/'11', the UE may determine that an A-SRS needs to be transmitted at a predetermined time, and look up corresponding resources according to the prestored first table of mapping relation, such as Table 3; wherein each state corresponds to a group of resources. Thus, the UE may use the preconfigured resources to transmit the A-SRS.

The above description is given taking that the base station configures the resources used in transmitting an A-SRS via high layer.

### Example 2: for receiving DCI format 0 (corresponding to Example 2 of Embodiment 2)

When the UE receives 'XY'='01'/'10'/'11', it may determine that an A-SRS needs to be transmitted at a predetermined time, and look up corresponding resources according to the prestored first table of mapping relation, such as Table 4; wherein each state corresponds to one group of resources. Thus, the UE may use the preconfigured resources in Table 4 and prestored shared resources to transmit the A-SRS.

In this way, high layer signaling overhead may be reduces.

### Example 3: for receiving DCI format 0 (corresponding to Example 3 of Embodiment 2)

For further reducing high layer signaling overhead, resources may also be dynamically configured, as shown in Tables 6-8.

In such a case, a part of resource information for transmitting the A-SRS configured by the base station via high layer signaling is prestored at the UE side, as shown in Table 5, and a table of mapping relation between other resources than this part of resource information and indication information is also stored, as shown in tables 6-8. Wherein the part of resource information is a subset of the resource information used in transmitting the A-SRS.

For example, as shown in Table 6, when the indication information received by the UE is 'XY'='00', the UE may be aware from Table 6 that no A-SRS is transmitted, and no antenna is needed; and when the UE receives 'XY'='01'/'10'/'11', it looks up corresponding antenna information from Table 6, wherein when 'XY'='01', 1 antenna is used to transmit the A-SRS, when 'XY'='10', 2 antennas are used to transmit the A-SRS, and when 'XY'='11', 4 antennas are used to transmit the A-SRS. Hence, the UE may use the part of resources configured via high layer (as shown in Table 5) and the resources indicated by the indication information "XY" to transmit the A-SRS.

For example, as shown in Table 7, when the indication information received by the UE is 'XY'='00', the UE may be aware from Table 7 that no A-SRS is transmitted, and no CC is used; and when the UE receives 'XY'='01', it denotes that an A-SRS is transmitted in the uplink CC to which the downlink CC indicated by DCI format 0 corresponds, when 'XY'='10', it denotes that an A-SRS is transmitted in the uplink CC with an index of "M", wherein "M" may be configured via high layer signaling RRC, and when 'XY'='11', it denotes that an A-SRS is transmitted in the uplink CC with an index of "N", wherein "N" may be configured via high layer signaling RRC. Hence, the UE may use the part of resources configured via high layer and the resources indicated by the indication information "XY" to transmit the A-SRS.

For example, as shown in Table 8, when the indication information received by the UE is 'XY'='00', the UE may be aware from Table 8 that no A-SRS is transmitted, and no cyclic shift is performed; and when the UE receives 'XY'='01', it denotes that an A-SRS is transmitted by using the CS with an index of "L", when 'XY'='10', it denotes that an A-SRS is transmitted by using the CS with an index of "M", and when 'XY'='11', it denotes that an A-SRS is transmitted by using the CS with an index of "N"; wherein "L, M and N" may be configured via high layer signaling RRC. Hence, the UE may use the part of resources configured via high layer and the resources indicated by the indication information "XY" to transmit the A-SRS.

What are shown in tables 6-8 are embodiments of the present invention only. However, it is not limited thereto, and other information may be configured dynamically, which may be determined as actually required. Therefore, high layer signaling overhead may be reduced by using dynamically configured resources, and A-SRSs may be transmitted more flexibly, thereby reducing the probability of the occurrence of collision between UE.

The above description is given taking that the part of the resources configured by the base station comprises the resources shared by the transmission of periodic SRSs and the transmission of A-SRSs.

### Example 4: for receiving DCI format 0 (corresponding to Example 4 of Embodiment 2)

In order to further reduce signaling overhead, the part of the resources configured by the base station may exclude the above shared resources, which may be prestored at the base station side and the UE side, for use by the UE.

Following description is given taking Table 9 and Table 8 as examples.

When the indication information received by the UE is 'XY'='00', the UE may be aware from Table 8 that no A-SRS is transmitted, and no cyclic shift is performed; and when the UE receives 'XY'='01', it denotes that an A-SRS is transmitted by using the CS with an index of "L", when 'XY'='10', it denotes that an A-SRS is transmitted by using the CS with an index of "M", and when 'XY'='11', it denotes that an A-SRS is transmitted by using the CS with an index of "N"; wherein "L, M and N" may be configured via high layer signaling RRC. Hence, the UE may use the part of resources configured via high layer (as shown in Table 9), the resources indicated by the indication information "XY" and the prestored shared to transmit the A-SRS.

The above detailed description is given taking DCI format 0 as an example. The cases for DCI format 4 are similar to what is described above, which shall be described below in brief by way of examples.

### Example 5: for receiving DCI format 4 (corresponding to Example 5 of Embodiment 2)

In this embodiment, the bits carrying the indication information are 1 bit of the NDI and 2 bits of the A-SRS request.

Similar to Example 1, the UE may look up Table 10 according to the indication information, and uses the preconfigured resource (as shown in Table 10) to transmit the A-SRS.

The above description is given taking that the base station configures the resources used in transmitting an A-SRS via high layer.

### Example 6: for receiving DCI format 4 (corresponding to Example 6 of Embodiment 2)

In this embodiment, the bits carrying the indication information are 1 bit of the NDI and 2 bits of the A-SRS request.

When the base station configures the resources in Table 11 and Table 12, if the UE receives the DCI, it reads the indication information therefrom; if 1 bit of the NDI corresponds to "0", and the 2 bits of the A-SRS request correspond to "11", the UE may determine the used resource is of "#1 CC" and other resources are the resources to which "11" in Table 11 corresponds.

The processing of the shared resources is similar to Example 2, which shall not be described herein any further.

### Example 7: for receiving DCI format 4 (corresponding to Example 7 of Embodiment 2)

The bits carrying the indication information are 1 bit of the NDI and 2 bits of the A-SRS request. Wherein "Z" corresponds to 1 bit of the NDI, and "XY" correspond to 2 bits of the A-SRS request.

Similar to Example 3 and Example 4, the base station configures a group of resources needed in transmitting A-SRSs, and other resources are configured by the base station dynamically.

When the base station configures the resources in Table 13 and Table 14, if the UE receives the DCI, it reads the indication information therefrom; if 1 bit of the NDI corresponds to "0", and the 2 bits of the A-SRS request correspond to "11", forming "011", the UE may determine according to Table 14 that the used resource is of a resource with the number of antennas being 2 and a CC index being "C1&C2" and other resources are the resources shown in Table 13.

### Example 8: for receiving DCI format 4

The bits carrying the indication information are 2 bits of the NDI and 2 bits of the A-SRS request.

This example is similar to Example 1, Example 2 and Example 5.

### Example 9: for receiving DCI format 4

The bits carrying the indication information are 2 bits of the NDI and 2 bits of the A-SRS request, which are denoted as "WZXY" in an order from the NDI to the A-SRS request. Wherein "WZ" corresponds to the 2 bits of the NDI, and "XY" correspond to the 2 bits of the A-SRS request.

Similar to Example 3, Example 4 and Example 7, the base station notifies the UE of the resources in FIG. 15 and FIG. 16 after configuration, and stores the configured resource information at the UE side.

If the UE receives the DCI transmitted by the base station, it reads the indication information therefrom, the order of reading may be predetermined, such as in an order of "WZXY", then looks up the configured resources according to Table 15 and Table 16, and uses the resource to transmit the A-SRS.

For example, if the two bits of the NDI are "01" and the two bits of the A-SRS request are "00", it can be seen through looking up Table 16 that the transmission comb is #1 according to the state "0" to which the first bit of the NDI corresponds, and it can be seen that the CS is C4 according to the "100" constituted by the state "1" to which the second bit of the NDI corresponds and the state "00" to which the two bits of the A-SRS request correspond.

In this way, the UE uses the looked up resources and the resources in Table 15 to transmit the A-SRS.

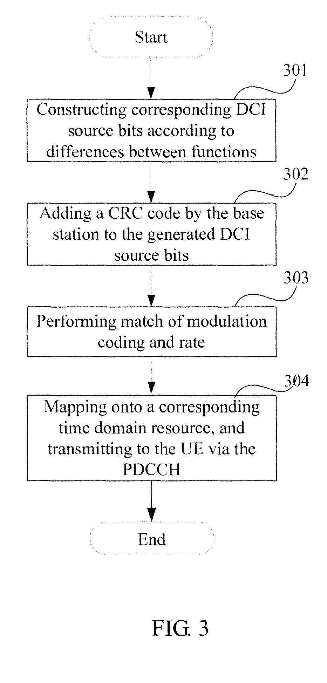

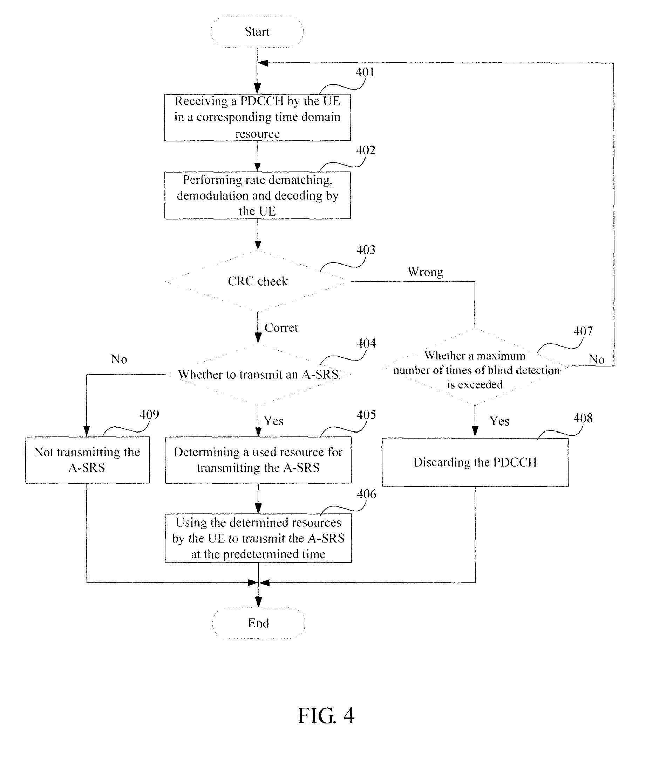

The method for transmitting an A-SRS of the embodiment of the present invention shall be described below taking that a bit of an NDI and bits of an A-SRS request in DCI format 0 or 4 are used to trigger transmission of an A-SRS and indicate the resources used in transmitting the A-SRS in an LTE-A FDD system configured with 10 MHz bandwidth with reference to Figs. 3 and 4.

Fig. 3 is a flowchart of the method for transmitting an aperiodic sounding reference symbol at a base station side of embodiment 4 of the present invention. As shown in Fig. 3, the method comprises:
step 301: constructing by the base station corresponding DCI source bits according to differences between functions;
wherein corresponding DCI source bits may be generated according to the transmission mode and the demands of the system; and wherein the process of generating the DCI source bits is similar to the prior art, which shall not be described herein any further;
using the bit of the NDI in the DCI and the bits of the A-SRS request to carry indication information, the indication information being as described in Embodiment 1 and Embodiment 2, which shall not be described herein any further;
step 302: adding a cyclic redundancy check (CRC) code by the base station to the generated DCI source bits;
step 303: performing match of modulation coding and rate to the DCI source bits to which the CRC code is added; and
step 304: forming a physical downlink control channel (PDCCH) and mapping it onto a corresponding physical time domain resource, and transmitting the physical time domain resource to the UE via the PDCCH.

Fig. 4 is a flowchart of the method for transmitting an aperiodic sounding reference symbol at a user equipment side of embodiment 4 of the present invention. As shown in Fig. 4, the method comprises:
detecting a possible DCI by UE according to the transmission mode, and then determining whether to transmit an A-SRS according to the detected DCI, comprising:
   step 401: receiving a PDCCH by the UE in a corresponding time domain resource;
   step 402: performing rate dematching, demodulation and decoding;
   step 403: judging whether the CRC is correct or wrong, and if it is correct, executing step 404, otherwise, executing step 407;
   step 404: judging further whether to transmit an A-SRS if the result of judgment in step 403 is that the CRC is correct, and if it is judged to transmit an A-SRS, executing step 405, otherwise, executing step 409;
   wherein whether to transmit an A-SRS may be judged by judging the state of the indication information, and details are as described in Embodiments 2 and 3, which shall not be described herein any further;
if it is determined to transmit an A-SRS, the UE may transmit the A-SRS at a predetermined time; wherein the transmitting the A-SRS at a predetermined time comprises:
   transmitting the A-SRS by the UE at a first subframe satisfying the cycle and offset condition after at least 4 subframes, if the UE receives DCI containing the triggering information at the n-*th* subframe;
   step 405: determining a used resource by the UE according to the indication information if the result of judgment in step 404 is to transmit the A-SRS;
   wherein the determination of the indication information and the resource is as described in Embodiments 1 and 2, which shall not be described herein any further;
   step 406: using the determined resources by the UE to transmit the A-SRS at the predetermined time;

furthermore, a corresponding PDSCH may also be received;
step 407: further determining whether a maximum number of times of blind detection is exceeded if the CRC in step 403 is wrong, and if the determined result is positive, executing step 408, otherwise, turning back to step 401;
step 408: discarding the PDCCH if the result of judgment in step 407 is positive, and terminating the process; and
step 409: not transmitting the A-SRS by the UE if the result of judgment in step 404 is not to transmit the A-SRS.

It can be seen from the above embodiment that the base station transmits indication information by using DCI for uplink transmission, such as the bits of an new data indicator (NDI:New Data Indicator) in DCI format 0 or DCI format 4, and the bits of an aperiodic SRS (A-SRS) request, so that the UE transmits the A-SRS according to the indication information, so that the UE transmits the A-SRS according to the indication information. This may not only effectively use the unused bits in DCI format 0 or 4, but also increase available resources, thereby reducing the occurrence of collision in the A-SRS.

It should be understood by those skilled in the art that all or part of the steps in the methods of the above embodiments may be carried out by hardware instructed by a program, and the program may be stored in a computer-readable storage medium. In the execution of the program, all or part of the steps in the methods of the above embodiments may be included, and the storage medium may comprise an ROM, an RAM, a floppy disc, and a compact disk, etc.

An embodiment of the present invention further provides a base station and UE as described in the embodiments below. As the principles of the base station and the UE for solving problems are similar to those of the methods for transmitting an A-SRS based on a base station and UE, the implementation of the methods may be referred to for the implementation of the base station and the UE, and the repeated parts shall not be described herein any further.

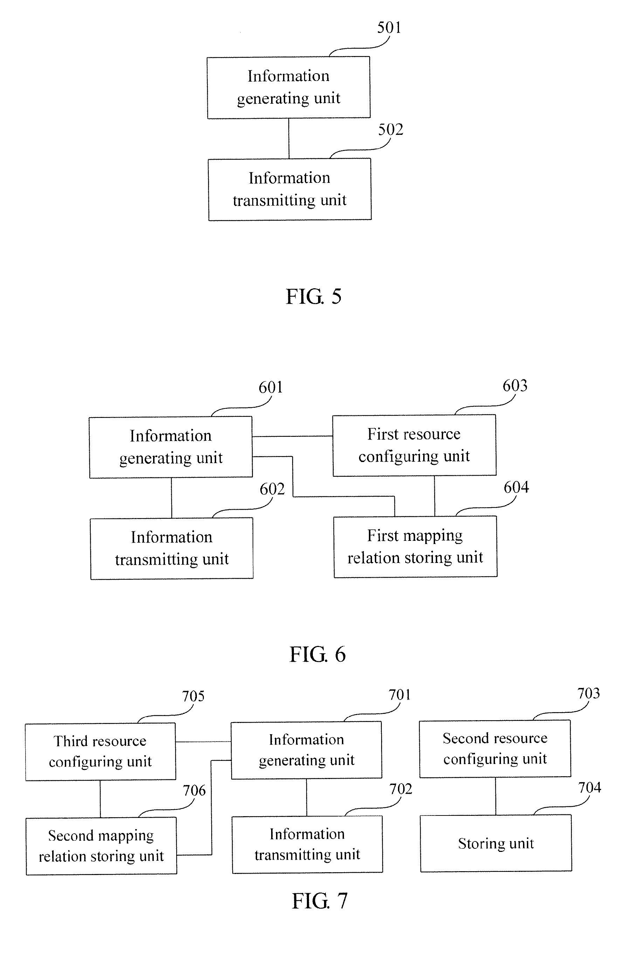

Fig. 5 is a structural diagram of the base station of embodiment 5 of the present invention. As shown in Fig. 5, the base station comprises: an information generating unit 501 and an information transmitting unit 502; wherein
the information generating unit 501 is configured to generate DCI for uplink transmission, the downlink control information comprising indication information on indicating UE whether to transmit an A-SRS and on the resource used in transmitting the A-SRS; and a bit of a NDI in the downlink control information and a bit of an A-SRS request being used to carry the indication information; and
the information transmitting unit 502 is configured to transmit the downlink control information to the UE such that the UE transmits the A-SRS according to the indication information contained in the DCI.

In this embodiment, the DCI may be DCI format 0 or DCI format 4.

In the above embodiment, the information generating unit 501 may use the method shown in Fig. 3, which shall not be described herein any further.

It can be seen from the above embodiment that the base station uses a bit of the NDI in the DCI for uplink transmission, such as DCI format 0 or DCI format 4, and a bit of the A-SRS request to transmit the indication information, so that the UE transmits the A-SRS according to the indication information. This may not only effectively use the unused bits in DCI format 0 or DCI format 4, but also increase available resources, thereby reducing the occurrence of collision in the A-SRS.

Fig. 6 is a structural diagram of the base station of embodiment 6 of the present invention. As shown in Fig. 6, the base station comprises: an information generating unit 601 and an information transmitting unit 602, with the functions being similar to those in Embodiment 5, which shall not be described herein any further.

Furthermore, the base station comprises a first resource configuring unit 603 and a first mapping relation storing unit 604; wherein
the first resource configuring unit 603 is configured to configure plural groups of resources, each of the groups of resources comprising the resource information used to transmitting the A-SRS;
the first mapping relation storing unit 604 is configured to store correspondingly the configured plural groups of resources and respective indication information;
and the resource indicated in the indication information to be used by the UE is one of the preconfigured plural groups of resources when the UE is indicated to transmit the A-SRS.

It can be seen from the above embodiment that the base station may configure resource information used in transmitting an A-SRS via high layer signaling, such as RRC, and correspondingly store the resource and the indication information, as shown in Table 3 and Table 10.

In the above embodiment, the resource information used in transmitting A-SRSs contained in each of the plural groups of resources configured by the first resource configuring unit 603 may be all the resource information configured by the base station for transmitting A-SRSs, and may also be a subset of all the resource information, which is as described in Embodiments 1-3, and shall not be described herein any further.

Fig. 7 is a structural diagram of the base station of embodiment 7 of the present invention. As shown in Fig. 7, the base station comprises: an information generating unit 701 and an information transmitting unit 702, with the functions being similar to those in Embodiment 5, which shall not be described herein any further.

Furthermore, the base station comprises a second resource configuring unit 703, a storing unit 704 and a third resource configuring unit 705; wherein
the second resource configuring unit 703 is configured to configure a part of a group of resource information used to transmit the A-SRS;
the storing unit 704 is configured to store the part of the resource information configured by the second resource configuring unit;
the third resource configuring unit 705 is configured to configure plural groups of the resources needed in the transmission of the A-SRS other than the part of resource information;
a second mapping relation storing unit 706 is configured to store correspondingly the configured plural groups of resources needed in the transmission of the aperiodic sounding reference symbol other than the part of resource information and respective indication information;
and the resource indicated in the indication information to be used by the UE is the resources needed in the transmission of the A-SRS other than the part of resources when the UE is indicated to transmit the A-SRS.

In the above embodiment, the part of the resources configured by the second resource configuring unit 703 are a subset of the resource information used in transmitting the A-SRS, which is as described in Embodiments 1-3, and shall not be described herein any further.

It can be seen from above that in order to reduce overhead of high layer signaling, the base station configures no resource shared with the transmission of an A-SRS, or configures only part of the resource information for transmitting an A-SRS via high layer signaling, and other resource information is dynamically configured by the indication information, that is, other resource information is determined from the resources shown in tables 6-8, 14 and 16 according to the indication information.

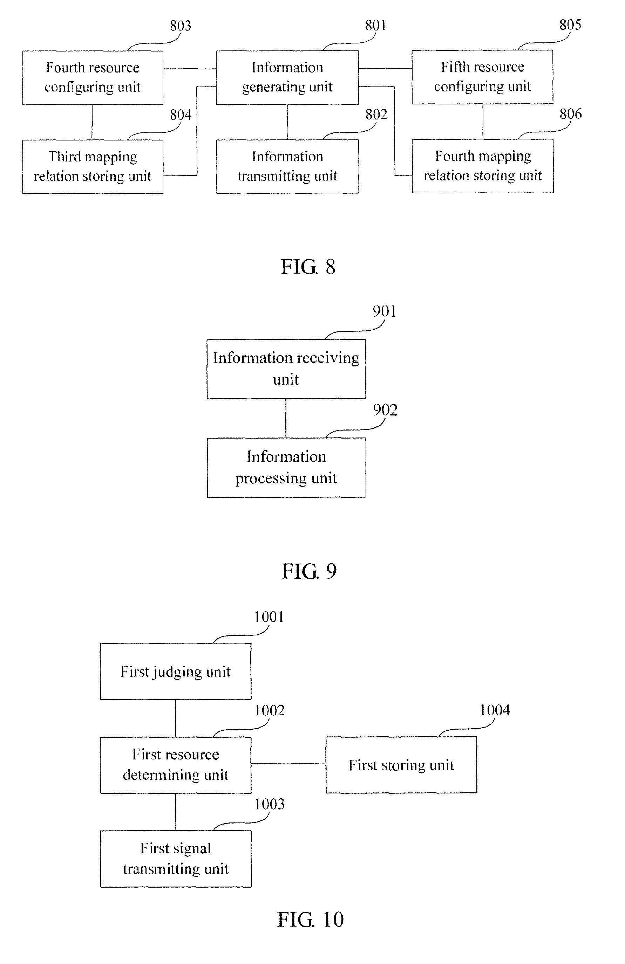

Fig. 8 is a structural diagram of the base station of embodiment 8 of the present invention. As shown in Fig. 8, the base station comprises: an information generating unit 801 and an information transmitting unit 802, with the functions being similar to those in Embodiment 5, which shall not be described herein any further.

Furthermore, the base station comprises a fourth resource configuring unit 803, a third mapping relation storing unit 804, a fifth resource configuring unit 805 and a fourth mapping relation storing unit 806; wherein
the fourth resource configuring unit 803 is configured to configure plural groups of resources of the number one less than that of the states of the bit of the A-SRS request;
the third mapping relation storing unit 804 is configured to store correspondingly the configured plural groups of resources and the states of the bit of the A-SRS request; each of the plural groups of resources comprising a part of the resource information used in the transmission of the A-SRS;
the fifth resource configuring unit 805 is configured to configure plural groups of resources for transmitting the A-SRS other than the part of the resource information and of the same number as that of the states of the bit of the NDI;
the fourth mapping relation storing unit 806 is configured to store correspondingly the configured plural groups of resources and the states of the bit of the NDI;
and the resource indicated in the indication information to be used by the user equipment comprises the resource corresponding to the states of the bit of the NDI and the resource corresponding to the states of the bit of the A-SRS request when the UE is indicated to transmit the A-SRS.

In the above embodiment, the resource information used for transmitting the A-SRS may also be a subset of the resource information used in transmitting the A-SRS configured by the base station.

In the above embodiment, when the third resource configuring unit configures a plural groups of resources needed in transmitting A-SRSs other than the part of the resource information, if the number of the bits of the NDI is 1, the state of the bit of the NDI and the states of the bits of the A-SRS request are respectively used to indicate different resource information;
or, when the number of the bits of the NDI is 2, the state of 1 bit of the NDI is used to indicate one resource, and the other bit of the NDI and the bit of the A-SRS request are used to indicate another resource.

In addition, particular manners of configuration of the first, second, third, fourth and fifth resource configuring units are as described in Embodiment 2, which shall not be described herein any further.

Furthermore, the base station may comprise an information notifying unit (not shown) configured to notify a mapping relation between the resources configured by the first, second, third, fourth and fifth resource configuring units and the indication information to the UE, so that the UE determines the resources used in transmitting the A-SRS according to the indication information and the mapping relation.

It can be seen from the above embodiment that the base station uses a bit of the NDI in the DCI for uplink transmission, such as DCI format 0 or DCI format 4, and a bit of the A-SRS request to transmit the indication information, so that the UE transmits the A-SRS according to the indication information. This may not only effectively use the unused bits in DCI format 0 or DCI format 4, but also increase available resources, thereby reducing the occurrence of collision in the A-SRS.

Fig. 9 is a structural diagram of the UE of embodiment 9 of the present invention. As shown in Fig. 9, the UE comprises an information receiving unit 901 and an information processing unit 902; wherein
the information receiving unit 901 is configured to receive DCI for uplink transmission transmitted by a base station, the DCI comprising indication information on indicating the UE whether to transmit an a A-SRS and on the resource used in transmitting the A-SRS; and a bit of a NDI in the DCI and a bit of an A-SRS request being used to carry the indication information;
and the information processing unit 902 is configured to transmit the A-SRS according to the indication information received by the information receiving unit 901.

In this embodiment, the DCI may be DCI format 0 or DCI format 4.

In the above embodiment, the information receiving unit 901 and the information processing unit 902 may use the method shown in Fig. 4, which shall not be described herein any further.

It can be seen from the above embodiment that the base station uses a bit of the NDI in the DCI for uplink transmission, such as DCI format 0 or DCI format 4, and a bit of the A-SRS request to transmit the indication information, so that the UE transmits the A-SRS according to the indication information. This may not only effectively use the unused bits in DCI format 0 or DCI format 4, but also increase available resources, thereby reducing the occurrence of collision in the A-SRS.

Fig. 10 is a structural diagram of the information processing unit of embodiment 9 of the present invention. As shown in Fig. 10, the information processing unit 902 comprises:
a first judging unit 1001 configured to judge whether the indication information is the indication information for transmitting the A-SRS;
a first resource determining unit 1002 configured to determine the resource used to transmit the A-SRS according to the indication information and a first mapping relation between prestored indication information and resources when the indication information is the indication information for transmitting the A-SRS; wherein the first mapping relation is a corresponding relation between plural groups of resources configured by the base station and indication information, wherein, each of the plural groups of resources comprising resource information used to transmit the A-SRS; and
a first signal transmitting unit 1003 configured to transmit the A-SRS by using the resource determined by the first resource determining unit 1002, or to transmit the A-SRS by using the resource determined by the first resource determining unit 1002 and the prestored resources.

Furthermore, the information processing unit 802 may comprise a first storing unit 1004 configured to store a first mapping relation between prestored indication information and resources. Wherein if the base station configures all the resource information used in transmitting the A-SRS, the first signal transmitting unit 1003 is configured to use the resources determined by the first resource determining unit 1002 to transmit the A-SRS, and if the base station configures a subset of all the resource information used in transmitting the A-SRS, that is, the shared resources are not configured, the first signal transmitting unit 1003 is configured to use the resources determined by the first resource determining unit 1002 and the prestored resources to transmit the A-SRS. Details are as described in embodiments 1-3, which shall not be described herein any further.

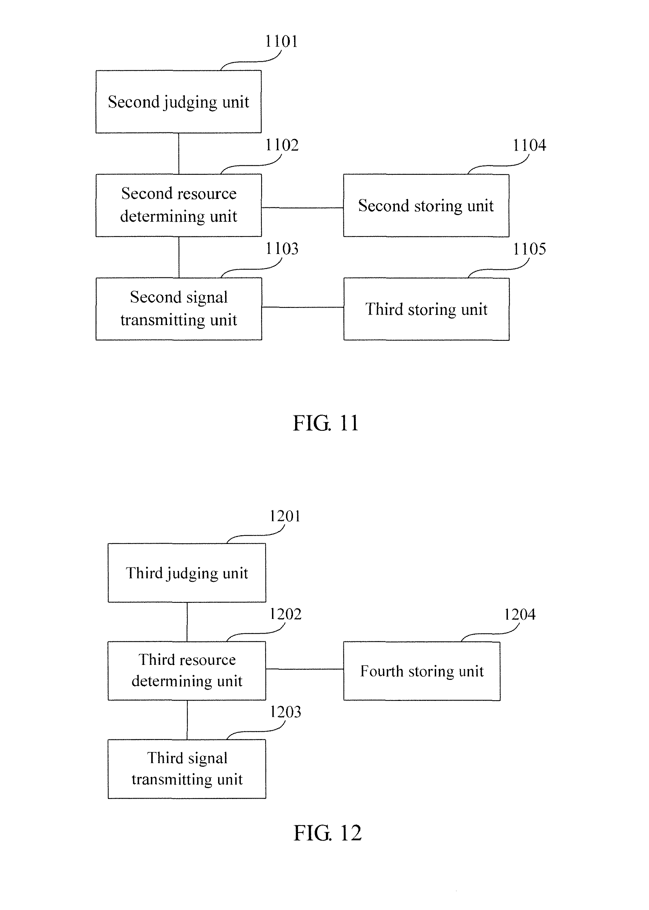

Fig. 11 is a structural diagram of the information processing unit of embodiment 9 of the present invention. As shown in Fig. 11, the information processing unit 902 comprises:
a second judging unit 1101 configured to judge whether the indication information is the indication information for transmitting the A-SRS;
a second resource determining unit 1102 configured to determine the resource used to transmit the A-SRS according to the indication information and a second mapping relation between prestored indication information and resources when the indication information is the indication information for transmitting the A-SRS; wherein the second mapping relation is a corresponding relation between the resource needed to transmit the A-SRS other than part of the resource information in the resource used to transmit the A-SRS configured by the base station and the indication information; and
a second signal transmitting unit 1103 configured to transmit the A-SRS by using the preconfigured resources and the resource determined by the second resource determining unit 1102.

Furthermore, the information processing unit 902 may comprise a second storing unit 1104 configured to store a second mapping relation between prestored indication information and resources; and it may further comprise a third storing unit 1105 configured to store a part of resources configured by the base station via high layer signaling. Wherein if the base station pre-configures a part of a group of resource information used in transmitting the A-SRS and the part of the resource information comprises the resources shared with the transmission of periodic SRS, the second signal transmitting unit 1103 is configured to use the prestored resources (a group of resources preconfigured by the base station) and the resources determined by the second resource determining unit 1102 to transmit the A-SRS.

And if the base station pre-configures a part of a group of resource information used in transmitting the A-SRS and the part of the resource information does not comprise the shared resources, the second signal transmitting unit 1103 is configured to use the prestored resources (a prestored group of resources configured by the base station and the prestored shared resources) and the resources determined by the second resource determining unit 1102 to transmit the A-SRS. Details are as described in embodiments 1-3, which shall not be described herein any further.

Fig. 12 is a structural diagram of the information processing unit of embodiment 9 of the present invention. As shown in Fig. 12, the information processing unit 902 comprises:
a third judging unit 1201 configured to judge whether the indication information is the indication information for transmitting the A-SRS;
a third resource determining unit 1202 configured to determine the resource used to transmit the A-SRS according to the indication information and a third mapping relation and a fourth mapping relation between prestored indication information and resources when the indication information is determined to be the indication information for transmitting the A-SRS;
wherein the third mapping relation is a corresponding relation between plural groups of resources configured by the base station and the state of the bit of the A-SRS request, wherein, each of the plural groups of resources comprising a part of the resource information used in the transmission of the A-SRS; and the fourth mapping relation is a corresponding relation between the resource needed to transmit the A-SRS other than part of the resource information in the resource used to transmit the A-SRS configured by the base station and the states of the bit of the new data indicator; and
a third signal transmitting unit 1203 configured to transmit the A-SRS by using the determined resource.

Furthermore, the information processing unit 902 may comprise a fourth storing unit 1204 configured to store a third and a fourth mapping relations between the indication information and the resources.

It can be seen from the above embodiment that the base station uses a bit of the NDI in the DCI for uplink transmission, such as DCI format 0 or DCI format 4, and a bit of the A-SRS request to transmit the indication information, so that the UE transmits the A-SRS according to the indication information. This may not only effectively use the unused bits in DCI format 0 or DCI format 4, but also increase available resources, thereby reducing the occurrence of collision in the A-SRS.

An embodiment of the present invention further provides a computer-readable program, wherein when the program is executed in a base station, the program enables the computer to carry out the method for transmitting an A-SRS as described embodiments 1 and 2 in the base station.

An embodiment of the present invention further provides a storage medium in which a computer-readable program is stored, wherein the computer-readable program enables the computer to carry out the method for transmitting an A-SRS as described embodiments 1 and 2 in a base station.

An embodiment of the present invention further provides a computer-readable program, wherein when the program is executed in user equipment, the program enables the computer to carry out the method for transmitting an A-SRS as described embodiment 3 in the user equipment.

An embodiment of the present invention further provides a storage medium in which a computer-readable program is stored, wherein the computer-readable program enables the computer to carry out the method for transmitting an A-SRS as described embodiment 3 in user equipment.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above in connection with particular embodiments. However, those skilled in the art should be understood that such description is illustrative only, and is not intended to limit the protection scope of the present invention. Various variants and modifications may be made by those skilled in the art in accordance with the spirits and principle of the present invention, and such variants and modifications fall within the scope of the present invention.

## Claims

1. A method for transmitting a sounding reference symbol, comprising:
generating by a base station downlink control information for uplink transmission, the downlink control information comprising indication information on indicating user equipment whether to transmit an aperiodic sounding reference symbol and on the resource used in transmitting the aperiodic sounding reference symbol; and a bit of a new data indicator in the downlink control information and a bit of an aperiodic sounding reference symbol request being used to carry the indication information; and
transmitting the downlink control information to the user equipment, such that the user equipment transmits the aperiodic sounding reference symbol according to the indication information contained in the downlink control information.

2. The method according to claim 1, wherein the method further comprises:
configuring by the base station plural groups of resources, each of the plural groups of resources comprising the resource information used for transmitting the aperiodic sounding reference symbol; and
storing correspondingly the configured plural groups of resources and respective indication information;
wherein the resource indicated in the indication information to be used by the user equipment is one of the preconfigured plural groups of resources when the user equipment is indicated to transmit the aperiodic sounding reference symbol.

3. The method according to claim 1, wherein the method further comprises:
configuring and storing by the base station a part of a group of resource information used to transmit the aperiodic sounding reference symbol;
configuring by the base station plural groups of the resources needed in the transmission of the aperiodic sounding reference symbol other than the part of resource information; and
storing correspondingly the configured resources needed in the transmission of the aperiodic sounding reference symbol other than the part of resource information and respective indication information;
wherein the resource indicated in the indication information to be used by the user equipment is the resources needed in the transmission of the aperiodic sounding reference symbol other than the part of resources when the user equipment is indicated to transmit the aperiodic sounding reference symbol.

4. The method according to claim 2 or 3, wherein the resource information used in the transmission of the aperiodic sounding reference symbol is a subset of the resource information for transmitting a periodic sounding reference symbol configured by the base station.

5. The method according to claim 1, wherein the method further comprises:
configuring by the base station plural groups of resources of the number one less than that of the states of the bit of the aperiodic sounding reference symbol request, and storing correspondingly the configured plural groups of resources and the states of the bit of the aperiodic sounding reference symbol request; each of the plural groups of resources comprising a part of the resource information used in the transmission of the aperiodic sounding reference symbol; and
configuring by the base station plural groups of resources for transmitting the aperiodic sounding reference symbol other than the part of the resource information and of the same number as that of the states of the bit of the new data indicator, and storing correspondingly the configured plural groups of resources and the states of the bit of the new data indicator;
wherein the resource indicated in the indication information to be used by the user equipment comprises the resource corresponding to the states of the bit of the new data indicator and the resource corresponding to the states of the bit of the aperiodic sounding reference symbol request when the user equipment is indicated to transmit the aperiodic sounding reference symbol.

6. The method according to claim 3, wherein when the base station configures plural resources needed to transmit the aperiodic sounding reference symbol other than the part of the resource information, the states of the bit of the new data indicator and the states of the bit of the aperiodic sounding reference symbol request are respectively used to indicate different resource information when the bit of the new data indicator is 1; or
when the bit of the new data indicator is 2, the state of 1 bit of the new data indicator is used to indicate one resource, and the other bit of the new data indicator and the bit of the aperiodic sounding reference symbol request are used to indicate another resource.

7. A method for transmitting a sounding reference symbol, comprising:
receiving by user equipment downlink control information for uplink transmission transmitted by a base station, the downlink control information comprising indication information on indicating user equipment whether to transmit an aperiodic sounding reference symbol and on the resource used in transmitting the aperiodic sounding reference symbol, and the base station using a bit of a new data indicator in the downlink control information and a bit of an aperiodic sounding reference symbol request to carry the indication information; and
transmitting by the user equipment the aperiodic sounding reference symbol according to the indication information.

8. The method according to claim 7, wherein the transmitting by the user equipment the aperiodic sounding reference symbol according to the indication information comprises:
determining by the user equipment the resource used to transmit the aperiodic sounding reference symbol according to the indication information and a prestored first mapping relation between indication information and resources if the user equipment determines that the indication information is indication information for transmitting the aperiodic sounding reference symbol; wherein the first mapping relation is a corresponding relation between plural groups of resources configured by the base station and indication information, each of the plural groups of resources comprising resource information used to transmit the aperiodic sounding reference symbol; and
transmitting the aperiodic sounding reference symbol by the user equipment by using the determined resource, or transmitting the aperiodic sounding reference symbol by the user equipment by using the determined resource and the prestored resources.

9. The method according to claim 7, wherein the transmitting by the user equipment the aperiodic sounding reference symbol according to the indication information comprises:
determining by the user equipment the resource used to transmit the aperiodic sounding reference symbol according to the indication information and a prestored second mapping relation between indication information and resources if the user equipment determines that the indication information is indication information for transmitting the aperiodic sounding reference symbol; wherein the second mapping relation is a corresponding relation between the resource needed to transmit the aperiodic sounding reference symbol other than part of the resource information in the resource used to transmit the aperiodic sounding reference symbol configured by the base station and the indication information; and
transmitting the aperiodic sounding reference symbol by the user equipment by using the prestored resources and the determined resources.

10. The method according to claim 7, wherein the transmitting by the user equipment the aperiodic sounding reference symbol according to the indication information comprises:
determining by the user equipment the resource used to transmit the aperiodic sounding reference symbol according to the indication information and a prestored third mapping relation and a fourth mapping relation between indication information and resources if the user equipment determines that the indication information is indication information for transmitting the aperiodic sounding reference symbol;
wherein the third mapping relation is a corresponding relation between plural groups of resources configured by the base station and the states of the bit of the aperiodic sounding reference symbol request, wherein, each of the plural groups of resources comprises a part of the resource information used in the transmission of the aperiodic sounding reference symbol; and the fourth mapping relation is a corresponding relation between the resource needed to transmit the aperiodic sounding reference symbol other than part of the resource information in the resource used to transmit the aperiodic sounding reference symbol configured by the base station and the states of the bit of the new data indicator; and
transmitting the aperiodic sounding reference symbol by the user equipment by using the determined resource.

11. A base station, comprising:
an information generating unit to generate downlink control information for uplink transmission, the downlink control information comprising indication information on indicating user equipment whether to transmit an aperiodic sounding reference symbol and on the resource used in transmitting the aperiodic sounding reference symbol; and a bit of a new data indicator in the downlink control information and a bit of an aperiodic sounding reference symbol request being used to carry the indication information; and
an information transmitting unit to transmit the downlink control information to the user equipment such that the user equipment transmits the aperiodic sounding reference symbol according to the indication information contained in the downlink control information.

12. The base station according to claim 11, wherein the base station further comprises:
a first resource configuring unit to configure plural groups of resources, each of the groups of resources comprising the resource information used to transmitting the aperiodic sounding reference symbol; and
a first mapping relation storing unit to store correspondingly the configured plural groups of resources and respective indication information;
wherein the resource indicated in the indication information to be used by the user equipment is one of the preconfigured plural groups of resources when the user equipment is indicated to transmit the aperiodic sounding reference symbol.

13. The base station according to claim 11, wherein the base station further comprises:
a second resource configuring unit to configure a part of a group of resource information used to transmit the aperiodic sounding reference symbol;
a storing unit to store the part of the resource information configured by the second resource configuring unit;
a third configuring unit to configure plural groups of the resources needed in the transmission of the aperiodic sounding reference symbol other than the part of resource information; and
a second mapping relation storing unit to store correspondingly the configured plural groups of resources needed in the transmission of the aperiodic sounding reference symbol other than the part of resource information and respective indication information;
wherein the resource indicated in the indication information to be used by the user equipment is the resources needed in the transmission of the aperiodic sounding reference symbol other than the part of resources when the user equipment is indicated to transmit the aperiodic sounding reference symbol.

14. The base station according to claim 11, wherein the base station further comprises:
a third resource configuring unit to configure plural groups of resources of the number one less than that of the states of the bit of the aperiodic sounding reference symbol request;
a third mapping relation storing unit to store correspondingly the configured plural groups of resources and the states of the bit of the aperiodic sounding reference symbol request; each of the plural groups of resources comprising a part of the resource information used in the transmission of the aperiodic sounding reference symbol;
a fourth resource configuring unit to configure plural groups of resources for transmitting the aperiodic sounding reference symbol other than the part of the resource information and of the same number as that of the states of the bit of the new data indicator; and
a fourth mapping relation storing unit to store correspondingly the configured plural groups of resources and the states of the bit of the new data indicator;
wherein the resource indicated in the indication information to be used by the user equipment comprises the resource corresponding to the states of the bit of the new data indicator and the resource corresponding to the states of the bit of the aperiodic sounding reference symbol request when the user equipment is indicated to transmit the aperiodic sounding reference symbol.

15. User equipment, comprising:
an information receiving unit to receive downlink control information for uplink transmission transmitted by a base station, the downlink control information comprising indication information on indicating the user equipment whether to transmit an aperiodic sounding reference symbol and on the resource used in transmitting the aperiodic sounding reference symbol; and a bit of a new data indicator in the downlink control information and a bit of an aperiodic sounding reference symbol request being used to carry the indication information; and
an information processing unit to transmit the aperiodic sounding reference symbol according to the indication information received by the information receiving unit.

16. The user equipment according to claim 15, wherein the information processing unit comprises:
a first judging unit to judge whether the indication information is the indication information for transmitting the aperiodic sounding reference symbol;
a first resource determining unit to determine the resource used to transmit the aperiodic sounding reference symbol according to the indication information and a first mapping relation between prestored indication information and resources when the indication information is the indication information for transmitting the aperiodic sounding reference symbol; wherein the first mapping relation is a corresponding relation between plural groups of resources configured by the base station and indication information, wherein, each of the plural groups of resources comprising resource information used to transmit the aperiodic sounding reference symbol; and
a first signal transmitting unit to transmit the aperiodic sounding reference symbol by using the resource determined by the first resource determining unit, or to transmit the aperiodic sounding reference symbol by using the resource determined by the first resource determining unit and the prestored resources.

17. The user equipment according to claim 15, wherein the information processing unit comprises:
a second judging unit to judge whether the indication information is the indication information for transmitting the aperiodic sounding reference symbol;
a second resource determining unit to determine the resource used to transmit the aperiodic sounding reference symbol according to the indication information and a prestored second mapping relation between indication information and resources when the indication information is the indication information for transmitting the aperiodic sounding reference symbol; wherein the second mapping relation is a corresponding relation between the resource needed to transmit the aperiodic sounding reference symbol other than part of the resource information in the resource used to transmit the aperiodic sounding reference symbol configured by the base station and the indication information; and
a second signal transmitting unit to transmit the aperiodic sounding reference symbol by using the preconfigured resources and the resource determined by the second resource determining unit.

18. The user equipment according to claim 15, wherein the information processing unit comprises:
a third judging unit to judge whether the indication information is the indication information for transmitting the aperiodic sounding reference symbol;
a third resource determining unit to determine the resource used to transmit the aperiodic sounding reference symbol according to the indication information and a third mapping relation and a prestored fourth mapping relation between indication information and resources when the indication information is determined to be the indication information for transmitting the aperiodic sounding reference symbol;
wherein the third mapping relation is a corresponding relation between plural groups of resources configured by the base station and the states of the bit of the aperiodic sounding reference symbol request, wherein, each of the plural groups of resources comprising a part of the resource information used in the transmission of the aperiodic sounding reference symbol; and the fourth mapping relation is a corresponding relation between the resource needed to transmit the aperiodic sounding reference symbol other than part of the resource information in the resource used to transmit the aperiodic sounding reference symbol configured by the base station and the states of the bit of the new data indicator; and
a third signal transmitting unit to transmit the aperiodic sounding reference symbol by using the determined resource.

19. A computer-readable program, wherein when the program is executed in a base station, the program enables the computer to carry out the method for transmitting an aperiodic sounding reference symbol as claimed in any of claims 1-6 in the base station.

20. A storage medium in which a computer-readable program is stored, wherein the computer-readable program enables the computer to carry out the method for transmitting an aperiodic sounding reference symbol as claimed in any of claims 1-6 in a base station.

21. A computer-readable program, wherein when the program is executed in user equipment, the program enables the computer to carry out the method for transmitting an aperiodic sounding reference symbol as claimed in any of claims 7-10 in the user equipment.

22. A storage medium in which a computer-readable program is stored, wherein the computer-readable program enables the computer to carry out the method for transmitting an aperiodic sounding reference symbol as claimed in any of claims 7-10 in user equipment.
